(19) **Europäisches Patentamt / European Patent Office / Office européen des brevets**

(11) **EP 1 332 169 B1**

(12) **EUROPÄISCHE PATENTSCHRIFT**

(45) Veröffentlichungstag und Bekanntmachung des Hinweises auf die Patenterteilung:
**28.12.2016 Patentblatt 2016/52**

(21) Anmeldenummer: **01992733.4**

(22) Anmeldetag: **30.10.2001**

(51) Int Cl.:
**C08J 3/12** *(2006.01)* **C08J 3/24** *(2006.01)*
**H01B 7/28** *(2006.01)* *C08L 101/14* *(2006.01)*

(86) Internationale Anmeldenummer:
**PCT/EP2001/012506**

(87) Internationale Veröffentlichungsnummer:
**WO 2002/036663 (10.05.2002 Gazette 2002/19)**

(54) **ABSORBIERENDES GEBILDE MIT VERBESSERTEN BLOCKINGEIGENSCHAFTEN**

ABSORBENT MATERIAL WITH IMPROVED BLOCKING PROPERTIES

STRUCTURE ABSORBANTE PRESENTANT DE MEILLEURES PROPRIETES DE BLOCAGE

(84) Benannte Vertragsstaaten:
**AT BE CH CY DE DK ES FI FR GB GR IE IT LI LU MC NL PT SE TR**

(30) Priorität: **30.10.2000 DE 10053858**

(43) Veröffentlichungstag der Anmeldung:
**06.08.2003 Patentblatt 2003/32**

(73) Patentinhaber: **Evonik Degussa GmbH**
**45128 Essen (DE)**

(72) Erfinder:
• **SMITH, Scott**
**Greensboro, NC 27407 (US)**

• **MESSNER, Bernfried**
**Greensboro, NC 27408 (US)**
• **FRANK, Markus**
**47918 Tönisvorst (DE)**

(74) Vertreter: **Lang, Arne et al**
**Evonik Industries AG**
**Intellectual Property Management**
**Bau 1042A / PB 15**
**Paul-Baumann-Straße 1**
**45764 Marl (DE)**

(56) Entgegenhaltungen:
**EP-A1- 0 644 224 EP-A1- 0 703 265**
**WO-A1-93/05080 DE-A1- 4 138 408**
**DE-C1- 4 020 780**

EP 1 332 169 B1

**Beschreibung**

Die Erfindung betrifft ein Verfahren zur Herstellung eines absorbierenden Polymergebildes, ein aus diesem Verfahren erhältliches absorbierendes Polymergebilde, ein Polymergebilde, einen Verbund, einen Verfahren zur Herstellung eines Verbunds, ein Verbund, erhältlich aus diesem Verfahren, Schäume, Formkörper, Fasern, Folien, Filme, Kabel, Dichtungsmaterialien, flüssigkeitsaufnehmende Hygieneartikel, Träger für pflanzen- und pilzwachstumregulierende Mittel, Verpackungsmaterialien und Bodenzusätze oder Baustoffe, beinhaltend dieses absorbierende Polymergebilde oder diesen Verbund, sowie die Verwendung dieses absorbierenden Polymergebildes oder dieses Verbunds in Schäumen, Formkörpern, Fasern, Folien, Filmen, Kabeln, Dichtungsmaterialien, flüssigkeitsaufnehmenden Hygieneartikeln, Trägern für pflanzen- und pilzwachstumregulierende Mittel, Verpackungsmaterialien, Bodenzusätzen oder Baustoffen.

Wasserabsorbierende Polymere werden im modernen Kabelbau eingesetzt, um diese Kabel vor eindrigendem Wasser und den daraus resultierenden Schäden zu schützen. Derartige Wasserschäden treten insbesondere dann auf, wenn die Aussenhülle oder der Aufbau der Kabel durch mechanische Einwirkung oder durch übermässiges Biegen verletzt wird. Durch die dadurch entstehenden Öffnungen kann das Wasser eindringen und, sofern kein wasserabsorbierendes Polymer vorhanden ist, den Aufbau der Kabel so nachhaltig beeinträchtigen, dass die Funktionsfähigkeit der Kabel nicht mehr gewährleistet ist. Eine andere Möglichkeit des Eindringens von Wasser besteht dann, wenn die Kabel vermehrt Wasserdampf ausgesetzt sind, der durch die Isolierung oder die Aussenhülle eindringt und anschliessend im inneren Aufbau der Kabel sich als Kondensat niederschlägt. Derartige Kondensate sorgen insbesondere bei elektrischen Kabeln für das Auftreten von die Funktionsfähigkeit des elektrischen Kabels beeinträchtigenden Kriechströmen oder den gesamten Aufbau der Kabel zerstörenden elektrischen Kurzschlüssen.

Im Zusammenhang mit dem Einsatz von wasserabsorbierenden Polymeren im Kabelbau ist es bevorzugt, dass diese wasserabsorbierenden Polymere neben einer guten Gelstabilität gute Blockingeigenschaften aufweisen.

Gute Blockingeigenschaften liegen dann vor, wenn die Penetration einer Testflüssigkeit durch das absorbierende Polymer möglichst gering. Demnach führen die guten Blockingeigenschaften dazu, dass das eindringende Wasser so lang wie möglich in dem absorbierenden Polymer zurückgehalten werden kann und auf diese Weise den weiteren Teil des Kabelaufbaus verzögert erreicht.

Außerdem benötigen diese wasserabsorbierenden Polymere eine gute Quellfähigkeit, um schnell und vollständig die Hohlräume im Kabel auszufüllen, wenn die Feuchtigkeit eindringt. Deshalb kann die Vernetzungsdichte der Polymere nicht zu groß sein. Eine geringe Vernetzungsdichte hingegen verringert die wiederum die Stabilität.

Beispiele für bisher verwendete wasserabsorbierende Polymere sind vernetzte, teilweise neutralisierte Polyacrylate, vernetzte, neutralisierte Propfpolymere von Acrylsäure auf Stärke, verseifte, vernetzte Copolymere aus Vinylacetat und Acrylsäureestern und neutralisierte, vernetzte Copolymer aus Isobutylen und Maleiinsäureanhydrid

Aus US Re 32,649 ist ein herkömmliches wasserabsorbierendes Polymer bekannt, das zwar gute Blockingeigenschaften zeigt, jedoch eine für den Kabelbau nicht befriedigende Gelstabilität aufweist.

Aus DE 40 20 780 ist ferner wasserabsorbierendes Polymer bekannt, das gegenüber dem vorgenannten herkömmlichen wasserabsorbierenden Polymer durch einen nach der Synthese des herkömmlichen Polymers erfolgenden Nachvernetzungsschritt modifiziert ist. Dieses nachvernetzte Polymer zeigt zwar eine für den Kabelbau akzeptable Gelstabilität, jedoch sind die Blockingeigenschaften dieses nachvernetzten Polymers für den Kabelbau nicht geeignet.

US 5639148 A offenbart, dass das fertige absorbierende Harzpulver zur Verbesserung der Fließfähigkeit feinteiliges Silica und zur Erhöhung der Lichtbeständigkeit oder zum Erlangen eines deodorierenden Effekts Ruß und/oder Aktivkohle enthalten kann.

Die US 5797893 A stellt unterschiedliche Methoden der Nachbehandlung in Zusammenhang mit einem Parameter "liquid permeation buffering index" dar.

Die JP-A-2000093792 beschreibt die Zugabe eines Siliciumdioxids zu einem oberflächenvemetzten absorbierenden Harz.

Der JP-A-11286611 ist zu entnehmen, dass es bei der Zugabe von Siliciumdioxid zu einem vernetzten absorbierenden Polymer die "absorption capacity under Load' mit größer werdenden Siliciumdioxid-Teilchen ansteigt, wonach es ab einer Teilchengrösse von $0.28 \mu m$ zu einem steten Anstieg der AUL kommt, was ein großer Nachteil für die Eigenschaften des absorbierenden Polymers ist.

Allgemein liegt der Erfindung als Aufgabe die Überwindung der sich aus dem Stand der Technik gegebenen Nachteile zugrunde.

Ferner besteht eine erfindungsgemässe Aufgabe darin, ein wasserabsorbierendes Polymer zur Verfügung zu stellen, das für den Kabelbau geeignet ist.

Zudem liegt eine erfindungsgemässe Aufgabe darin, ein wasserabsorbierendes Polymer zu schaffen, das sowohl über für den Kabelbau geeignete Blockingeigenschaften als auch über eine gleichfalls für den Kabelbau geeignete Stabilität verfügt.

Weiterhin liegt eine erfindungsgemässe Aufgabe darin, ein wasserabsorbierendes Polymer zur Verfügung zu stellen, das ausser für den Kabelbau auch für den Einsatz in Flüssigkeit absorbierenden Hygieneartikeln wie Damenbinden oder Windeln geeignet ist.

Die vorstehenden Aufgaben werden gelöst durch ein Verfahren zur Herstellung eines absorbierenden Polymergebildes (Pa), umfassend die Schritte:

- Erhöhen der Absorbency under Load bei einer Belastung von 0,3 oder 0,9 g (AUL) im Vergleich zu einem unbehandelten absorbierenden Polymergebilde (Pu) durch ein erstes Behandeln eines Aussenbereichs des unbehandelten absorbierenden Polymergebildes (Pu), wobei ein behandeltes absorbierendes Polymergebilde (Pb) erhalten wird;

- Erniedrigen des AUL im Vergleich zu dem behandelten absorbierenden Polymergebilde (Pb) durch ein weiteres Behandeln eines Aussenbereichs des behandelten absorbierenden Polymergebildes (Pb).

wobei das erste Behandeln durch einen chemischen Vernetzer, durch thermische Vernetzung oder durch Strahlenvernetzung und das zweite Behan-deln durch in Kontakt bringen des behandelten absorbierenden Polymergebildes (Pb) mit einem Beschichtungsmittel erfolgt und wobei das Beschichtungsmittel das als ein Beschichtungsmittelteilchen vorliegt ein auf einem Saccharid basierendes Polymer aufweist, wobei das behandelte absorbierende Polymergebilde (Pb) eine CRC gemäß ERT 441.1-99 von 10-100 g/g aufweist.

Erfindungsgemässe absorbierende Polymergebilde (Pa) sind Fasern, Schäume und Teilchen, wobei Fasern und Teilchen bevorzugt und Teilchen besonders bevorzugt sind.

Erfindungsgemäss bevorzugte absorbierende Polymerfasern sind so dimensioniert, das sie in oder als Garne für Textilien und auch direkt in Textilien eingearbeitet werden können. Es ist erfindungsgemäss bevorzugt, dass die absorbierenden Polymerfasern eine Länge im Bereich von 1 bis 500, bevorzugt 2 bis 500 und besonders bevorzugt 5 bis 100 mm und einen Durchmesser im Bereich von 1 bis 200, bevorzugt von 3 bis 100 und besonders bevorzugt von 5 bis 60 Denier besitzen.

Ferner ist es bevorzugt, dass die absorbierenden Polymergebilde (Pa) eine mittlere Teilchengrösse gemäß ERT 420.1-99 im Bereich von 10 bis 1000, vorzugsweise 50 bis 5000 und besonders bevorzugt 100 bis 1000 $\mu$m aufweisen.

Weiterhin ist es erfindungsgemäss bevorzugt, dass durch das weitere Behandeln die Retentionskapazität gemäss ERT 441.1 - 99 (CRC) prozentual, bezogen auf den Wert vor dem zweiten Behandeln, weniger absinkt als der AUL erniedrigt wird.

Das unbehandelte Polymergebilde (Pu) beinhaltet mindestens ein auf mindestens einem monoethylenisch ungesättigtem Monomer mit einer Säuregruppe basierendes Polymer. Die Säuregruppen des eingesetzten Monomers können teilweise oder vollständig, bevorzugt teilweise neutralisiert sein. In diesem Zusammenhang wird auf DE 195 29 348 verwiesen, deren Offenbarung hiermit als Referenz eingeführt wird und als Teil der Offenbarung gilt.

Bevorzugte monoethylenisch ungesättigte Monomere mit einer Säuregruppe sind Acrylsäure, Methacrylsäure, Ethacrylsäure, $\alpha$-Chloracrylsäure, $\alpha$-Cyanoacrylsäure, $\beta$-Methylacrylsäure (Crotonsäure), $\alpha$-Phenylacrylsäure, $\beta$-Acryloxypropionsäure, Sorbinsäure, $\alpha$-Chlorsorbinsäure, 2'-Methylisocrotonsäure, Zimtsäure, p-Chlorzimtsäure, $\beta$-Stearylsäure, Itaconsäure, Citraconsäure, Mesacronsäure, Glutaconsäure, Aconitsäure, Maleinsäure, Fumarsäure, Tricarboxyethylen und Maleinsäureanhydrid, hydroxyl- oder aminogruppenhaltige Ester der vorstehenden Säuren, vorzugsweise der Acryl- oder Methacrylsäure, wie z. B. 2-Hydroxyethylacrylat, N,N-Dimethylaminoethylacrylat sowie die analogen Derivate der Methacrylsäure, wobei Acrylsäure sowie Methacrylsäure besonders und Acrylsäure darüber hinaus bevorzugt sind.

Zusätzlich zu dem monoethylenisch ungesättigten Monomer mit einer Säuregruppe kann dieses Polymer auch auf weiteren, von dem monoethylenisch ungesättigten Monomer mit einer Säuregruppe verschiedenen Comonomere basieren. Als Comonomere bevorzugt sind ethylenisch ungesättigte Sulfonsäuremonomere, ethylenisch ungesättigte Phosphonsäuremonomere und Acrylamide bevorzugt.

Ethylenisch ungesättigte Sulfonsäuremonomere sind vorzugsweise aliphatische oder aromatische Vinylsulfonsäuren oder acrylische oder methacrylische Sulfonsäuren. Als aliphatische oder aromatische Vinylsulfonsäuren sind Vinylsulfonsäure, Allylsulfonsäure, 4-Vinylbenzylsulfonsäure, Vinyltoluolsulfonsäure und Stryrolsulfonsäure bevorzugt. Als Acryl- bzw. Methacrylsulfonsäuren sind Sulfoethylacrylat, Sulfoethylmethacrylat, Sulfopropylacrylat, Sulfopropylmethacrylat, 2-Hydroxy-3-methacryloxypropylsulfonsäure und 2-Acrylamid-2-methylpropansulfonsäure bevorzugt.

Ferner sind ethylenisch ungesättigte Phosphonsäuremonomere, wie Vinylphosphonsäure, Allylphosphonsäure, Vinylbenzylphosponsäure, Acrylamidoalkylphosphonsäuren, Acrylamidoalkyldiphosphonsäuren, phosponomethylierte Vinylamine und (Meth)acrylphosphonsäurederivate bevorzugt.

Mögliche Acrylamide sind alkylsubstituierte Acrylamide oder aminoalkylsubstituierte Derivate des Acrylamides oder des Methacrylamides, wie N-Vinylamide, N-Vinylformamide, N-Vinylacetamide, N- Vinyl-N-Methylacetamide, N-Vinyl-N-methylformamide, N-Methylol(meth)acrylamid, Vinylpyrrolidon, N,N-Dimethylpropylacrylamid, Dimethylacrylamid oder Diethylacrylamid und die entsprechenden Methacrylamidderivate sowie Acrylamid und Methacrylamid, wobei Acrylamid bevorzugt ist.

In Mengen im Bereich von 0,01 bis 20, bevorzugt von 0,1 bis 15 und besonders bevorzugt von 0,5 bis 5 Gew.-%, bezogen auf die insgesamt eingesetzten Monomere, können als Comonomere auch Monomere mit einer geringen Löslichkeit in Wasser eingesetzt werden. Als Beispiele für derartige Monomere seien Acrylsäure und Methacrylsäureester, wie Ethylacrylat und Methacrylacrylat, Butylacrylat und Butylmethacrylat, Vinylacetat, Styryl, Isobytylen, genannt.

Desweiteren können in Mengen im Bereich von 0,01 bis 20, bevorzugt von 0,1 bis 15 und besonders bevorzugt von 0,5 bis 5 Gew.-%, bezogen auf die insgesamt eingesetzten Monomere, wasserlösliche Polymere der Monomerlösung zugesetzt werden. Beispiele sind Polymere oder Copolymere der oben beschriebenen Monomere, wie Polyacrylsäure, teilweise verseiftes Polyvinylacetat, Polyvinylalkohol, Polyalkylenglykole, Stärke und Stärkederivate, Cellulose und Cellulosederivate sowie andere Polysaccharide.

Alle aufgeführten Säuren können als freie Säuren oder als Salze polymerisiert werden. Natürlich ist auch eine teilweise Neutralisation möglich. Ferner kann die Neutralisation teilweise oder ganz auch nach der Polymerisation erfolgen. Die Neutralisation der Monomere kann mit Alkalimetallhydroxiden, Erdalkalimetallhydroxiden, Ammoniak sowie Carbonaten und Bicarbonaten erfolgen. Daneben ist jede weitere Base denkbar, die mit der Säure ein wasserlösliches Salz bildet. Auch eine Mischneutralisation mit verschiedenen Basen ist denkbar. Bevorzugt ist die Neutralisation mit Ammoniak und Alkalimetallhydroxiden, besonders bevorzugt mit Natriumhydroxid und mit Ammoniak.

In einer bevorzugten Ausführungsform des erfindungsgemässen Verfahrens zeigt das unbehandelte absorbierende Polymergebilde (Pu) mindestens einer der folgenden Eigenschaften:

(a) maximale Aufnahme von 0.9 Gew-%er wässriger NaCl-Lösung gemäß ERT 440.1-99 in einem Bereich von 10 bis 1000, bevorzugt von 15 bis 500 und besonders bevorzugt von 20 von 300 ml/g,

(b) der mit 0.9 Gew-%er wässriger NaCl-Lösung extrahierbare Anteil gemäß ERT 470.1-99 beträgt weniger als 30, bevorzugt weniger als 20 und besonders bevorzugt weniger als 10 Gew.%, bezogen auf das unbehandelte absorbierende Polymergebilde,

(c) die Schwellzeit zum Erreichen von 80 % der maximalen Absorption von 0,9 Gew.-%er wässriger NaCl-Lösung gemäß ERT 440.1-99 liegt im Bereich von 0,01 bis 180, bevorzugt von 0,01 bis 150 und besonders bevorzugt von 0,01 bis 100 min.,

(d) die Schüttdichte gemäss ERT 470.1-99 liegt im Bereich von 300 bis 1000, bevorzugt 310 bis 800 und besonders bevorzugt 320 bis 700 g/l,

(e) der pH-Wert gemäss ERT 400.1-99 von 1 g des unbehandelten absorbierenden Polymergebildes in 11 Wasser liegt im Bereich von 4 bis 10, bevorzugt von 5 bis 9 und besonders bevorzugt von 5,5 bis 7,5,

(f) CRC gemäß ERT 441.1-99 im Bereich von 10 bis 100, bevorzugt 15 bis 80 und besonders bevorzugt 20 bis 60 g/g,

(g) Gelstabilität im Bereich von 1 bis 100 s bei einer ersten Messung vor einer Erwärmung und kleiner als 30 s bei einer zweiten Messung nach der Erwärmung, bevorzugt von 2 bis 50 s bei der ersten Messung vor der Erwärmung und kleiner als 20 s bei der zweiten Messung nach der Erwärmung und besonders bevorzugt von 5 bis 30 s bei der ersten Messung vor der Erwärmung und kleiner als 10 s bei der zweiten Messung nach der Erwärmung,

(h) Penetration von höchstens 15 cm nach 2 h oder höchstens 20 cm nach 24 h, bevorzugt von höchstens 12 cm nach 2 h oder höchstens 18 cm nach 24 h und besonders bevorzugt von höchstens 10 cm nach 2 h oder höchstens 16 cm nach 24 h, wobei die Penetration nach 2 h und nach 24 h bevorzugt sind.

Die sich aus den vorstehenden Eigenschaften ergebenden Eigenschaftskombinationen von zwei oder mehr dieser Eigenschaften stellen jeweils bevorzugte Ausführungsformen des erfindungsgemässen Verfahrens dar. Weiterhin als erfindungsgemässe Ausführungsformen besonders bevorzugt sind Verfahren, in denen das unbehandelte absorbierende Polymergebilde (Pu) die nachfolgend als Buchstaben oder Buchstabenkombinationen dargestellten Eigenschaften oder Eigenschaftskombinationen zeigt: a, b, c, d, e, f, g, h, ab, abc, abcd, abcde, abcdef, abcdefg, abcdefgh, bc, bcd, bcde, bcdef, bcdefg, bcdefgh, cd, cde, cdef, cdefg, cdefgh, de, def, defg, defgh, ef, efg, efgh, fg, fgh, gh.

Aus den vorgenannten Monomeren lässt sich das unbehandelte absorbierende Polymergebilde (Pu) durch verschiedene Polymerisationsweisen herstellen. Beispielsweise sind in diesem Zusammenhang Massepolymerisation, Lösungspolymerisation, Spraypolymerisation, inverse Emulsionspolymerisation und inverse Suspensionspolymerisation zu nennen. Bevorzugt wird die Lösungspolymerisation in Wasser als Lösungsmittel durchgeführt. Die Lösungspolymerisation kann kontinuierlich oder diskontinuierlich erfolgen. Aus dem Stand der Technik ist ein breites Spektrum von Variationsmöglichkeiten hinsichtlich Reaktionsverhältnisse wie Temperaturen, Art und Menge der Initiatoren als auch der Reaktionslösung zu entnehmen. Typische Verfahren sind in den folgenden Patentschriften beschrieben: US 4,286,082, DE 27 06 135, US 4,076,663, DE 35 03 458, DE 40 20 780, DE 42 44 548, DE 43 23 001, DE 43 33 056, DE 44 18 818. Die Offenbarungen werden hiermit als Referenz eingeführt und gelten somit als Teil der Offenbarung.

In dem erfindungsgemässen Verfahren erfolgt die erste Behandlung durch einen chemischen Vernetzer oder durch thermische Vernetzung oder Strahlenvernetzung oder mindestens zwei davon, wobei die Behandlung durch einen chemischen Vernetzer bevorzugt ist.

Die chemische Vernetzung wird durch dem Fachmann allgemein bekannte Vernetzer erreicht. Derartige Vernetzer werden vorzugsweise in einer Menge von weniger als 7, bevorzugt 0,1 bis 5 Gew.-%, bezogen auf das Gesamtgewicht der eingesetzten Monomere, eingesetzt. Erfindungsgemäss bevorzugte Vernetzer sind Polyacryl oder Polymethacrylsäureester, die beispielsweise durch die Umsetzung eines Polyols oder ethoxylierten Polyols wie Ethylenglykol, Propylenglykol, Trimethylolpropan, 1,6-Hexanydiolglycerin, Pentaerythrit, Polyethylenglykol oder Polypropylenglykol mit Acrylsäure oder Methacrylsäure gewonnen werden.

Verwendet werden können auch Polyole, Aminoalkohole sowie deren mono(meth)acrylsäureester und Monoallylether. Des Weiteren sind auch Acrylsäureester der Monoallylverbindungen der Polyole und Aminoalkohole bevorzugt. In diesem Zusammenhang wird auf DE 195 43 366 und DE 195 43 368 verwiesen. Die Offenbarungen werden hiermit als Referenz eingeführt und gelten somit als Teil der Offenbarung.

Eine andere Gruppe von Vernetzern wird gewonnen durch die Reaktion von Polyalkylenpolyaminen, wie Diethylentriamin und Triethylentetraamin mit Acrylsäure oder Methacrylsäure.

Als Vernetzer kommen in Betracht 1,4-Butandioldiacrylat, 1,4-Butandioldimethacrylat, 1,3-Butylenglykoldiacrylat, 1,3-Butylenglykoldimethacrylat, Diethylenglykoldiacrylat, Diethylenglykoldimethacrylat, ethoxyliertes Bisphenol-A-diacrylat, ethoxyliertes Bisphenol-A-dimethacrylat, Ethylenglykoldimethacrylat, 1,6-Hexandioldiacrylat, 1,6-Hexandioldimethacrylat, Neopentylglykoldimethacrylat, Polyethylenglykoldiacrylat, Polyethylenglykoldimethacrylat, Triethylenglykoldiacrylat, Triethylenglykoldimethacrylat, Tripropylenglykoldiacrylat, Tetraethylenglykoldiacrylat, Tetraethylenglykoldimethacrylat, Dipentaerythritpentaacrylat, Pentaerythrittetraacrylat, Pentaerythrittriacrylat, Trimethylolpropantriacrylat, Trimethyloltrimethacrylat, Tris(2-hydroxyethyl)isocyanorattriacrylat, Tris(2-hydroxyethyl)isocyanorattrimethacrylat, Divinylester von Polycarbonsäuren, Diallylester von Polycarbonsäuren, Triallylterephthalat, Diallylmaleat, Diallylfumarat, Hexamethylenbismaleinimid, Trivinyltrimellitat, Divinyladipat, Diallylsuccinat, Ethylenglykoldivinylether, Cyclopentadiendiacrylat, Triallylamin, Tetraallylammoniumhalide, Divinylbenzol, Divinylether, N,N'-Methylenbisacrylamid, N,N'-Methylenbismethacrylamid, Ethylenglykoldimethacrylat und Trimethylolpropantriacrylat. Hierunter bevorzugte Vernetzer sind N,N'-Methylenbisacrylamid, N,N'-Methylenbismethacrylamid, Polyethylenglykoldiacrylat, Polyethylenglykoldimethacrylat und Triallylamin.

Als sogenannte "Nachvernetzer" für die erste Behandlung besonders geeignet sind organische Carbonate, polyquatere Amine, polyvalente Metallverbindungen und Verbindungen, die mindestens zwei funktionelle Gruppen aufweisen, die mit Carboxylgruppen des unbehandelten Polymers (Pu) reagieren können. Hierbei handelt es sich insbesondere um Polyole und Aminoalkohole, wie Ethylenglykol, Diethylenglykol, Triethylenglykol, Tetraethylenglykol, Polyethylenglykol, Glycerin, Polyglycerin, Propylenglykol, Ethanolamin, Diethanolamin, Triethanolamin, Propanolamin, Polyoxypropylen, Oxyethylen-Oxypropylen-Blockpolymere, Sorbitanfettsäureesther, Polyoxyethylensorbitanfettsäureesther, Trimethylolpropanpentareritrit, Polyvinylalkohol- und sorbitol, Polyglycidylether-Verbindungen, wie Ethylenglykoldiglycidylether, Polyethylenglykoldiglycidylether, Glycerindiglycidylether, Glycerolpolyglycidylether, Pentareritritpolyglycidylether, Propylenglycoldiglycidylether und Polypropylenglykoldiglycidylether, Polyaceridin-Verbindungen, wie 2,2-Bishydroxymethylbuntanol-tris[3-(1-aceredinyl) propionat], 1,6-Hexamethylendiethylen-Harnstoff und Diphenylmethan-bis-4,4'-N,N'-diethylenharnstoff, Haloepoxyverbindungen wie Ethylendiamin, Diethylentriaamin, Triethylentetraamin, Tetraethylenpentaamin, Pentaethylenhexaamin und Polyethylenamine, Polyisocyanatverbindungen wie 2,4-Toluylen-diisocyanat und Hexamethylendiisocyanat, Zinkhydroxide, Kalzium-, Aluminium-, Eisen-, Titan- und Zirkonhalogenide, Alkylencarbonate wie 1,3-Dioxalan-2-on und 4-Methyl-1,3-Dioxalan-2-on, polyvalente Metallverbindungen wie Salze, polyquartere Amine wie Kondensationsprodukte von Dimethylaminen und Epichlorhydrin, Homo- und Copolymere von Diallyldimethylammoniumchlorid und Homo- und Copolymere von Diethylallylamino(meth)acrylatmethylchloridammoniumsalzen. Unter diesen Verbindungen sind bevorzugt Diethylenglykol, Triethylenglykol, Polyethylenglykol, Glyzerin, Polyglyzerin, Propylenglykol, Diethanolamin, Triethanolamin, Polyoxypropylen, Oxyethylenoxypropylen Blockcopolymer, Sorbitanfettsäureester, Polyoxyethylensorbitanfettsäureester, Trimethylolpropan, Pentereritrit, Polyvienylalkohol, Sorbitol, Alkylencarbonate wie 1,3-Dioxolan-2-on, 4-Methyl-1,3-dioxolan-2-on, 4,5-Dimethyl-1,3-dioxolan-2-on, 4,4-Dimethyl 1,3-dioxolan-2-on, 4-Ethyl-1,3-dioxolan-2-on, 4-Hydroxymethyl-1,3-dioxolan-2-on, 1,3-Dioxan-2-on, 4-Methyl-1,3-dioxan-2-on, 4,6-Dimethyl-1,3-dioxan-2-on, 1,3-Dioxopan-2-on, Poly-1,3-dioxolan-2-one und Ethylenglykoldiglycidylether.

Als Nachvernetzer sind des weiteren Polyoxazoline wie 1,2-Ethylenbisoxazolin, Vernetzer mit Silangruppen wie γ-Glycidoxypropyltrimethoxysilan und γ-Aminopropyltrimethoxysilan, Oxazolidinone wie 2-Oxazolidinon, Bis- und Poly-2-oxazolidinone, Diglykolsilikate bevorzugt.

Von den vorgenannten Nachvernetzern ist Ethylencarbonat besonders bevorzugt.

Diese Verbindungen werden vorzugsweise in einer Menge im Bereich von 0,01 bis 30, bevorzugt 0,1 bis 20 und besonders bevorzugt 0,5 bis 10 Gew.%, bezogen auf das unbehandelte Polymer (Pu) eingesetzt. Organische Lösungsmittel können der Mischung in einer Menge von 0 bis 60, bevorzugt 0,1 bis 40 und besonders bevorzugt 0,2 bis 50 Gew.%, bezogen auf das unbehandelte Polymer (Pu), zugesetzt werden. Als organische Lösungsmittel sind bevorzugt niedere Alkohole wie Mehtanol, Ethanol, n-Propanol, Isopropanol, n-Butanol, Isobutanol, sec-Butanol und t-Butanol, Ketone wie Aceton, Mehtylethylketon und Methylisobutylketon, Ether wie Dioxan, Tetrahydrofuran und Diethylether, Amide wie N,N-Dimethylformamid und N,N-Diethylformamid sowie Sulfoxide wie Dimethylsulfoxid.

Ferner ist es in dem erfindungsgemässen Verfahren bevorzugt, dass das behandelte, absorbierende Polymergebilde (Pb) einen von dem Aussenbereich umgebenen Innenbereich aufweist und der Aussenbereich einen höheren Vernetzungsgrad als der Innenbereich besitzt. Weiterhin ist es in diesem Zusammenhang bevorzugt, dass der Innenbereich einen grösseren Durchmesser als der Aussenbereich besitzt.

Ferner ist in dem erfindungsgemässen Verfahren bevorzugt, dass das behandelte absorbierende Polymergebilde (Pb) mindestens eine der folgenden Eigenschaften zeigt:

(A) maximale Aufnahme von 0.9 Gew-%er wässriger NaCl-Lösung gemäß ERT 440.1-99 in einem Bereich von 10 bis 800, bevorzugt von 15 bis 400 und besonders bevorzugt von 20 von 200 ml/g,

(B) der mit 0.9 Gew-%er wässriger NaCl-Lösung extrahierbare Anteil gemäß ERT 470.1-99 beträgt weniger als 30, bevorzugt weniger als 20 und besonders bevorzugt weniger als 10 Gew.%, bezogen auf das behandelte absorbierende Polymergebilde,

(C) die Schwellzeit zum Erreichen von 80 % der maximalen Absorption von 0,9 Gew.-%er wässriger NaCl-Lösung gemäss ERT 440.1-99 liegt im Bereich von 0,01 bis 180, bevorzugt von 0,01 bis 150 und besonders bevorzugt von 0,01 bis 100 min.,

(D) die Schüttdichte gemäss ERT 470.1-99 liegt im Bereich von 300 bis 1000, bevorzugt 310 bis 800 und besonders bevorzugt 320 bis 700 g/l,

(E) der pH-Wert gemäss ERT 400.1-99 von 1 g des unbehandelten absorbierenden Polymergebildes in 11 Wasser liegt im Bereich von 4 bis 10, bevorzugt von 5 bis 9 und besonders bevorzugt von 5,5 bis 7,5,

(F) CRC gemäss ERT 441.1-99 im Bereich von 10 bis 100, bevorzugt 15 bis 80 und besonders bevorzugt 20 bis 60 g/g,

(G) Gelstabilität im Bereich von mindestens 400 s bei einer ersten Messung vor einer Erwärmung und mindestens 80 s bei einer zweiten Messung nach der Erwärmung, bevorzugt von mindestens 500 s bei der ersten Messung vor der Erwärmung und mindestens 200 s bei der zweiten Messung nach der Erwärmung und besonders bevorzugt mindestens 600 s bei der erster Messung vor der Erwärmung und mindestens 300 s bei der zweiten Messung nach der Erwärmung,

(H) Penetration von mindestens 10 cm nach 2 h oder mindestens 20 cm nach 24 h, bevorzugt von mindestens 15 cm nach 2 h oder mindestens 25 cm nach 24 h und besonders bevorzugt von mindestens 20 cm nach 2 h oder mindestens 30 cm nach 24 h, wobei die Penetration nach 2 h und nach 24 h bevorzugt sind.

Die sich aus den vorstehenden Eigenschaften ergebenden Eigenschaftskombinationen von zwei oder mehr dieser Eigenschaften stellen jeweils bevorzugte Ausführungsformen des erfindungsgemässen Verfahrens dar. Weiterhin als erfindungsgemässe Ausführungsformen besonders bevorzugt sind Verfahren, in denen das behandelte absorbierende Polymergebilde (Pb) die nachfolgend als Buchstaben oder Buchstabenkombinationen dargestellten Eigenschaften oder Eigenschaftskombinationen zeigt: A, B, C, D, E, F, G, H, AB, ABC, ABCD, ABCDE, ABCDEF, ABCDEFG, ABCDEFGH, BC, BCD, BCDE, BCDEF, BCDEFG, BCDEFGH, CD, CDE, CDEF, CDEFG, CDEFGH, DE, DEF, DEFG, DEFGH, EF, EFG, EFGH, FG, FGH, GH, wobei alle Kombinationen mit G bevorzugt und mit G und H besonders bevorzugt sind.

Weiterhin ist es in einer Ausführungsform des erfindungsgemässen Verfahrens bevorzugt, dass der AUL-Wert bei einer Belastung von 0,3 oder 0,9 psi des unbehandelten absorbierenden Polymergebildes (Pu) um mindestens 1, bevorzugt mindestens 7 und besonders bevorzugt mindestens 15 g/g durch das erste Behandeln des Aussenbereichs des unbehandelten absorbierenden Polymergebildes (Pu) erhöht wird.

Ferner ist es in einer Ausführungsform des erfindungsgemässen Verfahrens bevorzugt, dass der AUL-Wert bei einer Belastung von 0,3 und 0,9 psi des unbehandelten absorbierenden Polymergebildes (Pu) um mindestens 1, bevorzugt mindestens 7 und besonders bevorzugt mindestens 15 g/g durch das erste Behandeln des Aussenbereichs des unbehandelten absorbierenden Polymergebildes (Pu) erhöht wird.

Zudem ist es in einer Ausführungsform des erfindungsgemässen Verfahrens bevorzugt, dass der AUL bei einer Belastung von 0,3 psi des unbehandelten absorbierenden Polymergebildes (Pu) von 15 auf mindestens 20, bevorzugt mindestens 25 und besonders bevorzugt mindestens 30 g/g durch das erste Behandeln des Aussenbereichs des unbehandelten absorbierenden Polymergebildes (Pu) erhöht wird. Der AUL bei einer Belastung von 0,3 psi liegt vorzugsweise bei maximal 50 und besonders bevorzugt bei maximal 40 g/g.

Ausserdem ist es in einer Ausführungsform des erfindungsgemässen Verfahrens bevorzugt, dass der AUL bei einer Belastung von 0,9 psi des unbehandelten absorbierenden Polymergebildes (Pu) von 5 auf mindestens 10, bevorzugt mindestens 15 und besonders bevorzugt mindestens 20 g/g durch das erste Behandeln des Aussenbereichs des unbehandelten absorbierenden Polymergebildes (Pu) erhöht wird. Der AUL bei einer Belastung von 0,9 psi liegt vorzugsweise bei maximal 40 und besonders bevorzugt bei maximal 30 g/g.

Gemäß einer Ausführungsform ist es in dem Schritt des erfindungsgemässen Verfahrens, in dem das behandelte absorbierende Polymergebilde (Pb) durch das zweite Behandeln des Aussenbereichs des behandelten absorbierenden Polymergebildes (Pb), behandelt wird, bevorzugt, dass der AUL bei einer Belastung von 0,3 oder 0,9 psi um jeweils mindestens 1, bevorzugt mindestens 2 und besonders bevorzugt mindestens 4 g/g erniedrigt wird.

Gemäß einer weiteren Ausführungsform ist es in dem Schritt des erfindungsgemässen Verfahrens, in dem das behandelte absorbierende Polymergebilde (Pb) durch das zweite Behandeln des Aussenbereichs des behandelten absorbierenden Polymergebildes (Pb), behandelt wird, bevorzugt, dass der AUL bei einer Belastung von 0,3 und 0,9 psi um jeweils mindestens 1, bevorzugt mindestens 2 und besonders bevorzugt mindestens 4 g/g erniedrigt wird.

Das zweite Behandeln erfolgt durch in Kontakt bringen des behandelten absorbierenden Polymergebildes (Pb) mit einem Beschichtungsmittel.

Weiterhin ist es bevorzugt, dass das behandelte absorbierende Polymergebilde (Pb) im Rahmen des zweiten Behandelns mit dem Beschichtungsmittel in einem Bereich von 0,001 bis 40, bevorzugt von 0,01 bis 20 und besonders bevorzugt von 0,1 bis 10 und darüber hinaus bevorzugt von 1 bis 5 Gew.-%, bezogen auf das behandelte absorbierende Polymergebilde (Pb), in Kontakt gebracht wird.

In einer weiteren Ausführungsform des zweiten Behandelns wird zunächst der Aussenbereich des behandelten Polymergebildes einer Energie ausgesetzt und anschließend mit einem Beschichtungsmittel in Kontakt gebracht.

In einer anderen Ausführungsform des zweiten Behandelns wird zunächst der Aussenbereich des behandelten mit einem Beschichtungsmittel in Kontakt gebracht und das Polymergebilde anschließend einer Energie ausgesetzt.

Ferner ist es in dem erfindungsgemässen Verfahren bevorzugt, dass das behandelte absorbierende Polymergebilde (Pb) zusätzlich zu dem Beschichtungsmittel mit einem Benetzungsmittel in Kontakt gebracht wird. In diesem Zusammenhang ist es besonders bevorzugt, dass das behandelte absorbierende Polymer (Pb) zunächst mit dem Beschichtungsmittel und anschliessend mit dem Benetzungsmittel in Kontakt gebracht wird.

In diesem Zusammenhang ist es bevorzugt, dass das behandelte absorbierende Polymergebilde (Pb) mit dem Benetzungsmittel in einem Bereich von 0,001 bis 40, bevorzugt von 0,01 bis 20 und besonders bevorzugt von 0,1 bis 10 und darüber hinaus bevorzugt von 1 bis 5 Gew.-%, bezogen auf das behandelte absorbierende Polymergebilde (Pb), in Kontakt gebracht wird.

In dem erfindungsgemässen Verfahren ist es ferner bevorzugt, dass das Beschichtungsmittel einen organischen und einen anorganischen Bestandteil aufweist. Das Beschichtungsmittel liegt als Beschichtungsmittelteilchen vor, wobei es bevorzugt ist, dass die Teilchen kleiner sind als das Gebilde. Vorzugsweise besitzen mindestens 50 Gew.-% der Beschichtungsmittelteilchen eine Grösse im Bereich von 0,05 bis 800 $\mu$m, bevorzugt 0,05 bis 600 $\mu$m, besonders bevorzugt von 0,05 bis 400 $\mu$m und darüber hinaus besonders bevorzugt von 0,1 bis 200 $\mu$m.

Weiterhin ist es in dem erfindungsgemässen Verfahren bevorzugt, dass der organische Bestandteil ein Polymer (Ps) ist. Es ist bevorzugt, dass dieses Polymer (Ps) als 4 Gew.%e Lösung in deionisiertem Wasser eine Viskosität bei 20 °C im Bereich von 1 bis 100.000, vorzugsweise von 10 bis 50.000 und besonders bevorzugt von 100 bis 10.000 mPa·s besitzt.

Bei dem Polymer (Ps) handelt es sich ein auf einem Saccharid basierendes Polymer. Als Beispiele seien hier Xanthan, Stärken, Guarkermehl, Citosan, Alginat, Dextrin, Agar-Agar, Carrageen, Tragant, Gummi arabicum, Alginate, Pectine, Polyosen, Guar-Mehl, Johannisbrotbaummehl oder Polyacryl-, Polymethacrylverbindungen, Vinylpolymere, Polycarbonsäuren, Polyether, Polyimine, Polyamide genannt.

Gemäß dem erfindungsgemässen Verfahrens basiert das Polymer (Ps) auf einem Saccharid. Besonders bevorzugt sind derivatisierte Saccharide, wie Ester, Ether und carboxymethylierte Derivate. Die Ether der Saccharide sind vorzugsweise mit $C_1$- bis $C_{1000000}$-, bevorzugt $C_1$- bis $C_{10000}$- und darüber hinaus bevorzugt mit $C_1$- bis $C_{10}$-Alkylgruppen derivatisierte Saccharide. Unter diesen wiederum sind die Methyl, Ethyl, Propyl, Butyl derivatisierten Saccharide bevorzugt, wobei die Mentylgruppen derivatisierten Saccharide besonders bevorzugt sind. Beispiele für Ester der Saccharide sind Acetate, Acetobutyrate, Acetopropionate oder Propionate. Das Polymer (Ps) besteht vorzugsweise mindestens aus 10, bevorzugt mindestens 50 und besonders bevorzugt mindestens 90 Gew.%, bezogen auf das Polymer (Ps), aus einem Saccharid beziehungsweise Polysaccharid. Unter den Polysacchariden sind Cellulose und Stärke bevorzugt, wobei Cellulose besonders bevorzugt ist. Weiterhin ist es bevorzugt, daß die Cellulosen als Carboxymethylcellulosen vorliegen, wobei Natrium- und Kaliumcarboxymethylcellulosen bevorzugt und Natriumcarboxymethylcellulose besonders bevorzugt ist.

In dem erfindungegemässen Verfahren ist es ferner bevorzugt, dass der anorganische Bestandteil ein Feststoff ist, der mindestens eine der folgenden Eigenschaften zeigt:

($\alpha$) eine Oberfläche nach BET gemäss DIN 66131 von mindestens 10, bevorzugt von mindestens 50 und besonders bevorzugt von mindestens 200 und darüber hinaus im Bereich von 180 bis 1000 m$^2$/g,
($\beta$) einen pH-Wert in einer 4%igen wässrigen Dispersion im Bereich von 2 bis 11, bevorzugt von 2,5 bis 8 und besonders bevorzugt von 3 bis 5,
($\gamma$) ein Stampfdichte in Anlehnung an DIN 787/XI und JIS K 5101/18 (nicht gesiebt): weniger als 800 g/l, bevorzugt weniger als 300 g/l, besonders bevorzugt weniger als 60 g/l.

Die sich aus den vorstehenden Eigenschaften ergebenden Eigenschaftskombinationen von zwei oder mehr dieser Eigenschaften stellen jeweils bevorzugte Ausführungsformen des erfindungsgemässen Verfahrens dar. Weiterhin als erfindungsgemässe Ausführungsformen besonders bevorzugt sind Verfahren, in denen der anorganische Bestandteil die nachfolgend als Buchstaben oder Buchstabenkombinationen dargestellten Eigenschaften oder Eigenschaftskombinationen zeigt: $\alpha$, $\beta$, $\gamma$, $\alpha\beta$, $\alpha\beta\gamma$, $\beta\gamma$ oder $\alpha\gamma$, wobei $\alpha\beta\gamma$ besonders bevorzugt ist.

Weiterhin ist in dem erfindungsgemässen Verfahren bevorzugt, dass der anorganische Bestandteil auf einer Siliciumverbindung basiert, wobei alle dem Verfahren bekannten Siliciumsauerstoffverbindungen, beispielsweise Aerosile und Kaoline bevorzugt sind, worunter Aerosile besonders bevorzugt sind.

Weiterhin ist es bevorzugt, dass das behandelte absorbierende Polymergebilde (Pb) mit dem anorganischen Beschichtungsmittel in einem Bereich von 0,001 bis 40, bevorzugt von 0,01 bis 20 und besonders bevorzugt von 0,05 bis 5 Gew.-%, bezogen auf das behandelte absorbierende Polymergebilde (Pb), in Kontakt gebracht wird.

Das in Kontakt bringen des behandelten absorbierenden Polymergebildes (Pb) mit dem Beschichtungsmittel erfolgt vorzugsweise durch Mischen des behandelten absorbierenden Polymergebildes (Pb) mit dem Beschichtungsmittel. Sofern das Beschichtungsmittel sowohl aus dem anorganischen als aus dem organischen Bestandteil besteht, ist es bevorzugt, dass der anorganische und der organische Bestandteil, bevor diese mit dem behandelten absorbierenden Polymergebilde in Kontakt gebracht werden, gemischt worden sind. Zum Mischen können alle dem Fachmann bekannten Mischvorrichtungen eingesetzt werden.

Als Benetzungsmittel können alle dem Fachmann bekannten anorganischen oder organischen Flüssigkeiten verwendet werden, wobei anorganische Flüssigkeiten bevorzugt sind. Unter den anorganischen Flüssigkeiten ist Wasser besonders bevorzugt.

Das Benetzungsmittel wird vorzugsweise entweder während des Mischvorgangs des behandelten absorbierenden Polymergebildes mit dem Beschichtungsmittel zugegeben, oder auf das Produkt aus der Mischung von behandelten absorbierenden Polymergebilde und Beschichtungsmittel aufgesprüht.

Weiterhin betrifft die Erfindung ein absorbierendes Polymergebilde (Pa), das aus dem zuvor beschriebenen erfindungsgemässen Verfahren erhältlich ist mit mindestens einer der folgenden Eigenschaften:

($\beta$1) CRC vom mindestens 10, bevorzugt von mindestens 15 und besonders bevorzugt von mindestens 20 g/g, darüber hinaus bevorzugt mindestens 25 g/g,

($\beta$2) ein AUL bei einer Belastung von 0,3 psi von mindestens 15, bevorzugt mindestens 20 g/g,

($\beta$3) ein AUL bei einer Belastung von 0,9 psi von mindestens 8, bevorzugt mindestens 12 g/g,

($\beta$4) Gelstabilität im Bereich von mindestens 100 s nach einer ersten Messung vor einer Erwärmung und mindestens 15 s bei der zweiten Messung nach der Erwärmung, bevorzugt von mindestens 200 s bei der ersten Messung vor der Erwärmung und mindestens 20 s bei der zweiten Messung nach der Erwärmung und besonders bevorzugt mindestens 300 s bei der ersten Messung vor der Erwärmung und mindestens 30 s bei der zweiten Messung nach der Erwärmung,

($\beta$5) Penetration von höchstens 15 cm nach 2 h oder höchstens 20 cm nach 24 h, bevorzugt von höchstens 10 cm nach 2 h oder höchstens 15 cm nach 24 h und besonders bevorzugt von höchstens 6 cm nach 2 h oder höchstens 8 cm nach 24 h, wobei Penetrationen nach 2 h und 24 h bevorzugt sind, oder

($\beta$6) Quelldruck von mindestens 400, vorzugsweise von mindestens 500, weiterhin bevorzugt von mindestens 600 und darüber hinaus bevorzugt 800 g.

beinhaltend einen Innenbereich, einen den Innenbereich umgebenden Aussenbereich sowie einen den Aussenbereich umgebenden Oberflächenbereich, wobei der Aussenbereich einen höheren Vernetzungsgrad als der Innenbreich aufweist und der Oberflächenbereich ein Beschichtungsmittel aufweist.

Die sich aus den vorstehenden Eigenschaften ergebenden Eigenschaftskombinationen von zwei oder mehr dieser Eigenschaften stellen jeweils bevorzugte Ausführungsformen des erfindungsgemässen absorbierenden Polymergebildes (Pa) dar. Weiterhin als erfindungsgemässe Ausführungsformen besonders bevorzugt ist ein absorbierendes Polymergebilde, welches die nachfolgend als Buchstaben oder Buchstabenkombinationen dargestellten Eigenschaften oder Eigenschaftskombinationen zeigt:

$\beta$1, $\beta$2, $\beta$3, $\beta$4, $\beta$5, $\beta$6, $\beta$1$\beta$2, $\beta$1 $\beta$2$\beta$3, $\beta$1$\beta$2$\beta$3$\beta$4, $\beta$1$\beta$2$\beta$3$\beta$4$\beta$5, $\beta$1$\beta$2$\beta$3$\beta$4$\beta$5$\beta$6, $\beta$2$\beta$3, $\beta$2$\beta$3$\beta$4, $\beta$2$\beta$3$\beta$4$\beta$5, $\beta$2$\beta$3$\beta$4$\beta$5$\beta$6, $\beta$3$\beta$4, $\beta$3$\beta$4$\beta$5, $\beta$3$\beta$4$\beta$5$\beta$6, $\beta$4$\beta$5, $\beta$4$\beta$5$\beta$6 wobei $\beta$1$\beta$2$\beta$3$\beta$4$\beta$5$\beta$6 besonders bevorzugt ist.

Eine erfindungsgemässe Ausführungsform bildet ein absorbierendes Polymergebilde (Pa) mit einem AUL bei einer Belastung von 0,3 psi von kleiner 27 und einem Quelldruck von mindestens 400, vorzugsweise von mindestens 500, weiterhin bevorzugt von mindestens 600 und darüber hinaus bevorzugt 800 g. In dieser Ausführungsform bevorzugt ist ein absorbierendes Polymergebilde (Pa) mit einem AUL bei einer Belastung von 0,3 psi in einem Bereich von 1 bis 27, bevorzugt von 10 bis 27, und einem Quelldruck im Bereich von 500 bis 3000, bevorzugt von 600 bis 2800, weiterhin bevorzugt im Bereich von 700 bis 2600 und darüber hinaus bevorzugt im Bereich von 800 bis 2400 g. Ferner ist es erfindungsgemäss bevorzugt, dass das absorbierende Polymergebilde (Pa) dieser Ausführungsform einen Innenbereich, einen den Innenbereich umgebenden Aussenbereich sowie einen den Aussenbereich umgebenden Oberflächenbereich beinhaltet, wobei der Aussenbereich einen höheren Vernetzungsgrad als der Innenbreich aufweist und der Oberflächenbereich ein Beschichtungsmittel aufweist. Es ist weiterhin erfindungsgemäss bevorzugt, dass die vorstehenden Merkmale auch für das aus dem erfidungsgemässen Verfahren erhältliche absorbierende Polymer gelten.

Weiterhin betrifft die Erfindung einen Verbund, beinhaltend ein zuvor definiertes absorbierendes Polymergebilde (Pa) und ein Substrat.

Erfindungsgemäss sind als Verbund Dichtmaterialien, Kabel, absorbierende Cores sowie diese enthaltende Windeln und Hygieneartikel bevorzugt.

Bei den Dichtungsmaterialien handelt es sich vorzugsweise um wasserabsorbierende Filme, worin das absorbierende Polymergebilde (Pa) in einer Polymermatrix oder Fasermatrix als Substrat eingearbeitet ist. Dieses erfolgt vorzugsweise dadurch, dass das absorbierende Polymergebilde (Pa) mit einem die Polymer- oder Fasermatrix bildenden Polymer (Pm) gemischt und anschliessend durch gegebenenfalls thermische Behandlung verbunden wird. Für den Fall, dass das absorbierende Gebilde als Faser eingesetzt wird, können daraus Garne gewonnen werden, die mit weiteren aus einem anderen Material bestehenden Fasern als Substrat versponnen und dann beispielsweise über Verweben oder Verstricken miteinander verbunden werden oder direkt, d. h. ohne mit weiteren Fasern versponnen zu werden, verbunden werden. Typische Verfahren hierzu sind bei H. Savano et al., International Wire & Cabel Symposium Proceedings 40,333 bis 338 (1991); M. Fukuma et al., International Wire & Cabel Symposium Proceedings, 36,350 bis 355 (1987) und in US 4,703,132 beschrieben. Diese Offenbarungen werden hiermit als Referenz eingeführt und gelten somit als Teil der Offenbarung.

In der Ausführungsform, in der der Verbund ein Kabel ist, kann das absorbierende Polymergebilde (Pa) als Teilchen direkt, vorzugsweise unter der Isolierung des Kabels eingesetzt werden. In einer anderen Ausführungsform des Kabels kann das absorbierende Polymergebilde (Pa) in Form von schwellbaren, zugfesten Garnen eingesetzt werden. Gemäss einer anderen Ausführungsform des Kabels kann das absorbierende Polymergebilde (Pa) als quellbarer Film eingesetzt werden. Wiederum in einer anderen Ausführungsform des Kabels kann das absorbierende Polymergebilde (Pa) als feuchtigkeitsabsorbierende Seele in der Mitte des Kabels eingesetzt werden. Das Substrat bildet im Fall des Kabels alle Bestandteile des Kabels, die kein absorbierendes Polymergebilde (Pa) enthalten. Hierunter fallen die in dem Kabel eingebauten Leiter, wie elektrische Leiter oder Lichtleiter, optische bzw. elektrische Isoliermittel sowie Bestandteile des Kabels, die die mechanische Beanspruchbarkeit des Kabels gewährleisten, wie Geflechte, Gewebe oder Gewirke aus zugfesten Materialien wie Kunststoffen und Isolierungen aus Gummi oder anderen Materialien, die die Zerstörung der Aussenhaut des Kabels verhindern.

Wenn der Verbund ein absorbierendes Core ist, ist das absorbierende Polymergebilde (Pa) in ein Substrat eingearbeitet. Für Cores kommen als Substrat überwiegend aus Cellulose bestehende, vorzugsweise faserförmige Materialien in Betracht. In einer Ausführungsform des Cores ist das absorbierende Polymergebilde (Pa) in einer Menge im Bereich von 10 bis 90, bevorzugt von 20 bis 80 und besonders bevorzugt von 40 bis 70 Gew.%, bezogen auf das Core, eingearbeitet. In einer Ausführungsform des Cores ist das absorbierende Polymergebilde (Pa) als Teilchen in das Core eingearbeitet. In einer anderen Ausführungsform des Cores ist das absorbierende Polymergebilde (Pa) als Faser in das Core eingearbeitet. Das Core kann zum einen durch ein sogenanntes Airlaid-Verfahren oder durch ein sogenanntes Wetlaid-Verfahren hergestellt werden, wobei ein gemäss dem Airlaid-Verfahren hergestelltes Core bevorzugt ist. In dem Wetlaid-Verfahren werden die Fasern oder Teilchen aus absorbierendem Polymergebilde zusammen mit weiteren Substratfasern und einer Flüssigkeit zu einem Vlies verarbeitet. In dem Airlaid-Verfahren werden die Fasern oder Teilchen aus absorbierendem Polymergebilde und die Substratfasern im trockenen Zustand zu einem Vlies verarbeitet. Weitere Einzelheiten zu Airlaid-Verfahren sind in US 5,916,670 sowie US 5,866,242 und zu Wetlaid-Verfahren in US 5,300,192 beschrieben, deren Offenbarung hiermit als Referenz eingeführt wird und als Teil der Offenbarung gilt.

In dem Wetlaid- und Airlaid-Verfahren können neben den absorbierenden Polymerfasern oder Teilchen und den Substratfasern noch weitere geeignete, dem Fachmann bekannte Hilfsmittel eingesetzt werden, die zur Verfestigung des aus diesem Verfahren gewonnenen Vliese beitragen.

In der Ausführungsform, in der der Verbund eine Windel ist, stellen die Bestandteile der Windel, die von dem absorbierenden Polymergebilde (Pa) verschieden sind, das Substrat des Verbundes dar. In einer bevorzugten Ausführungsform enthält die Windel ein zuvor beschriebenes Core. In diesem Fall stellen die von dem Core unterschiedlichen Bestandteile der Windel das Substrat des Verbundes dar. Im allgemeinen umfasst ein als Windel eingesetzter Verbund eine wasserundurchlässige Unterschicht, eine wasserdurchlässige, vorzugsweise hydrophobe, Oberschicht und eine das absorbierende Polymergebilde (Pa) beinhaltende Schicht, die zwischen der Unterschicht und der Oberschicht angeordnet ist. Diese das absorbierende Polymergebilde (Pa) beinhaltende Schicht ist vorzugsweise ein zuvor beschriebenes Core. Die Unterschicht kann alle dem Fachmann bekannten Materialien aufweisen, wobei Polyethylen oder Polypropylen bevorzugt sind. Die Oberschicht kann gleichfalls alle dem Fachmann bekannten und geeigneten Materialien enthalten, wobei Polyester, Polyolifine, Viskose und dergleichen bevorzugt sind, die eine so poröse Schicht ergeben, dass ein ausreichender Flüssigkeitsdurchlass der Oberschicht sichergestellt ist In diesem Zusammenhang wird auf die Offenbarung in US 5,061,295, US Re. 26,151, US 3,592,194, US 3,489,148 sowie US 3,860,003 verwiesen. Diese Offenbarungen werden hiermit als Referenz eingeführt und gelten somit als Teil der Offenbarung. Weiterhin betrifft die Erfindung ein Verfahren zur Herstellung eines Verbunds, wobei ein erfindungsgemässes absorbierendes Polymergebilde und ein Substrat und ggf. ein geeignetes Hilfsmittel miteinander in Kontakt gebracht werden. Das in Kontakt bringen erfolgt vorzugsweise durch Wetlaid- und Airlaid-Verfahren, Kompaktieren, Extrudieren und Mischen.

Zudem betrifft die Erfindung ein Verbund, der durch das vorstehende Verfahren erhältlich ist.

Ferner betrifft die Erfindung Schäume, Formkörper, Fasern, Folien, Filme, Kabel, Dichtungsmaterialien, flüssigkeitsaufnehmende Hygieneartikel, Träger für pflanzen- und pilzwachstumsregulierende Mittel, Zusätze für Baustoffe, Verpackungsmaterialien und Bodenzusätze, die das erfindungsgemässe absorbierende Polymergebilde (Pa) oder das vorstehend beschriebene Substrat beinhalten.

Außerdem betrifft die Erfindung die Verwendung des erfindungsgemässen absorbierenden Polymersgebildes (Pa) oder des zuvor beschriebenen Substrats in Schäumen, Formkörpern, Fasern, Folien, Filmen, Kabeln, Dichtungsmaterialien, flüssigkeitsaufnehmenden Hygieneartikeln, Trägern für pflanzen- und pilzwachstumsregulierende Mittel, Zusätzen für Baustoffe, Verpackungsmaterialien und Bodenzusätzen.

Die Erfindung wird nun anhand nicht limitierender Beispiele näher erläutert.

## BEISPIELE

**Pulver 1** (nicht nachvernetzt):

290 g Acrylsäure wurden in 2 Portionen geteilt. Eine Portion wurde in 458,5 g $H_2O$ gegeben. 0,90 g Triallylamin und 0,87 g Allyloxypolyethylenglykolacrylsäureester wurden in der 2. Portion Acrylsäure gelöst und ebenfalls dem Wasser hinzugefügt. Die Lösung wurde auf 10 °C gekühlt. Danach wurden unter Kühlen insgesamt 225,4 g 50 %e Natronlauge mit einer Geschwindigkeit zugesetzt, dass die Temperatur nicht über 30 °C stieg. Anschliessend wurde die Lösung bei 20 °C mit Stickstoff gespült und dabei weiter abgekühlt. Bei Erreichen der Starttemperatur von 4 °C wurden die Initiatorlösungen (0,1 g 2,2-Azobis-2-amidinopropan-dihydrochlorid in 10 g $H_2O$, 1,0 g Natriumperoxodisulfat in 10 g $H_2O$, 0,1 g 30 %e Wasserstoffperoxidlösung in 1 g $H_2O$ und 0,015 g Ascorbinsäure in 2 g Wasser) zugesetzt. Nachdem die Endtemperatur von ca. 100 °C erreicht war, wurde das entstandene Gel zerkleinert und bei 150 °C 90 Minuten getrocknet. Das getrocknete Pulver wurde grob zerstossen, gemahlen und gesiebt, so dass ein Pulver mit einer Partikelgrösse zwischen 150 und 850 $\mu$m entstand.

**Pulver 2** (nachvernetzt):

Zu 50 g des Pulvers 1 wurden unter Rühren mit einem Mixer eine Mischung aus 0,5 g Ethylencarbonat, 1,0 g $H_2O$ und 4,0 g Aceton zugegeben. Das Produkt wurde in einer Photoschale verteilt und 50 Minuten bei 170°C in einem Umlufttrockenschrank getrocknet.

**Pulver 3** (organisches Beschichtungsmittel):

50 g von Pulver 2 wurden mit 1 g Na-Carboxymethylcellulose-Pulver in einem Mixer mit Rührblättern zu einer Mischung vereinigt. Anschliessend wurde diese Mischung mit 1,5 g Wasser besprüht und für weitere 5 min gerührt.

**Pulver 4** (organisches und anorganisches Beschichtungsmittel):

50 g von Pulver 2 wurden mit 1 g Carboxymethylcellulose-Pulver und 0,1 g Aerosil® 200 der Degussa-Hüls in einem Mischer mit Rührblättern zu einer Mischung vereinigt. Anschliessend wurde diese Mischung mit 1,5 g Wasser besprüht und für weitere 5 min gerührt.

**Pulver 5** (schwach nachvernetzt):

300 g Acrylsäure wurden in 2 Portionen geteilt. 1 Portion wurde in 376,4 g $H_2O$ gegeben: 0,90 g Triallylamin und 1,5 g Allyloxypolyethylenglykolacrylsäureester wurden in der zweiten Portion Acrylsäure gelöst und ebenfalls dem Wasser hinzugefügt. Die Lösung wurde auf 10 °C gekühlt. Danach wurden unter Kühlen insgesamt 283,1 g 50 %e Natronlauge mit einer Geschwindigkeit zugesetzt, dass die Temperatur nicht über 30 °C stieg. Anschliessend wurde die Lösung bei 20 °C mit Stickstoff gespült und dabei weiter abgekühlt. Bei Erreichen der Starttemperatur von 4 °C wurde die Initiatorlösung (0,1 g 2,2;-Azobis-2-amidinopropan-dihydrochlorid in 10 g $H_2O$, 1,0 g Natriumperoxodisulfat

in 10 g $H_2O$, 0,1 g 30 %e Wasserstoffperoxidlösung in 1 g $H_2O$ und 0,015 g Ascorbinsäure in 2 g Wasser) zugesetzt. Nachdem die Endtemperatur erreicht war, wurde das entstandene Gel zerkleinert und bei 150 °C 90 min getrocknet. Das getrocknete Produkt wurde grob zerstossen, gemahlen und gesiebt, so dass ein Pulver mit einer Partikelgrösse von 150 bis 850 μm entstand. 50 g des Pulvers wurde mit einer Lösung von 1,5 g Ethylencarbonat in 1 g $H_2O$ besprüht und in einem Umluftschrank 35 min bei 190 °C getrocknet.

In der nachfolgenden Tabelle 1 sind die Ergebnisse verschiedener Testuntersuchungen von Pulver 1 bis 5 dargestellt:

Tabelle 1

|  | Pulver 1 | Pulver 2 | Pulver 3 erfindungsgemäss | Pulver 4 erfindungsgemäss | Pulver 5 |
|---|---|---|---|---|---|
| CRC [g/g] | 40 | 31,4 | 31,1 | 31 | 30,7 |
| Quelldruck [g] | 250 | 800 | 780 | 815 | 375 |
| AUL 0.3 [g/g] | 14,1 | 31,6 | 26,9 | 26,4 | 26,7 |
| AUL 0.9 [g/g] | 7,8 | 23,1 | 16,8 | 16,2 | 10,9 |
| Gelstabilität |  |  |  |  |  |
| 1. Messung | 15 | > 600 | 415 | 300 | 114 |
| 2. Messung | <4 | 548 | 64 | 34 | <4 |
| Penetration |  |  |  |  |  |
| 0 min | 2 | 28 | 5 | 5 | 1 |
| 30 min | 3 | 30 | 5 | 7 | 3 |
| 1 h | 4 | 30 | 6 | 7 | 3 |
| 2h | 5 | 30 | 10 | 8 | 5 |
| 24 h | 13 | 40 | 15 | 8 | 16 |

Die Pulver wurden zu Cores verarbeitet und zeigen Eigenschaften gemäss Tabelle 2

Tabelle 2

|  | Airlaid 1, Pulver 2 | Airlaid 2, Pulver 3 | Airlaid 3, Pulver 5 |
|---|---|---|---|
| 1. Einsickerzeit [s] | 50 | 28 | 45 |
| 2. Einsickerzeit [s] | 111 | 240 | 147 |
| 3. Einsickerzeit [s] | 191 | 542 | 307 |
| 1. Flüssigkeitsverteilung [mm] | 160 | 137 | 147 |
| 2. Flüssigkeitsverteilung [mm] | 170 | 140 | 153 |
| 3. Flüssigkeitsverteilung [mm] | 213 | 190 | 203 |

**Herstellung von Cores und Windel**

Die Cores wurden mittels einer Mischung von 50 Gew.-% eines absorbierenden Polymergebildes (Pulver 2, 3 oder 5), bezogen auf das Core, und 47,5 Gew.-% Zellulosefasern Stora Fluff EF der Firma Stora-Enzo AB Schweden, sowie 2,5 Gew.-% einer Zweikomponentenfaser aus jeweils 50 Gew.-% Polypropylen (PP) bzw. Polyethylen (PE) mit PP Kern und PE Mantel der Firma Fibervision A/S Dänemark durch ein Airlaid-Verfahren mit einer M&J-Maschine (Breite 40 cm, Arbeitsbreite 36 cm, Bandgeschwindigkeit 4 m/min, Fluffeinzug an Hammermühle 4 m/min, Polymerdosierung 430 g/min, Zweikomoponentenfaser in 10 g Portionen 2,1 mal/min abgeworfen) gebildet, wobei das absorbierende Polymer homogen eingetragen wurde. Cores mit einem Basisgewicht von 600 ohne und 636 g/cm² mit Tissue, einer Dichte von 0,16 bis 0,17 g/cm³ und einer Abmessung von 30 * 12 cm wurde in ein handelsübliches Fixies Windelchassis von der Firma Paul Hartmann AG, Recklinghausen eingefügt. Dazu wurde das Windelchassis auf der Rückseite aufgeschnitten, das Orginalcore entfernt, durch das erfindungsgemässe Core ersetzt und der Schnitt durch ein Gewebeklebeband versiegelt. Von den so erhaltenen Windeln wurden die Einsickerzeiten und die Flüssigkeitsverteilung bestimmt; die Werte sind Tabelle 3 zu entnehmen.

Tabelle 3

| Windel mit Core mit | Einsickerzeit Zugaben | | | Flüssigkeitsverteilung Zugaben | | |
|---|---|---|---|---|---|---|
| | 1. [sec.] | 2. [sec.] | 3. [sec.] | 1. [mm] | 2. [mm] | 3. [mm] |
| Pulver 3 (erfindungsgemäss) | 45 | 147 | 307 | 147 | 153 | 203 |
| Pulver 5 (vergleich) | 38 | 240 | 542 | 137 | 140 | 190 |

Kürzere Einsickerzeiten und Flüssigkeitsverteilung über eine größere Strecke in einer Windel sind Indikatoren für eine geringeren Blockingeffekt in Hygieneartikeln. Aus Tabelle 3 wird deutlich, dass das erfindungsgemässe Pulver 3 in einem Core in einer Windel eine im Vergleich zu einem Core mit Pulver 5 in einer Windel insbesondere in den für Windeln kritischen zweiten und dritten Zugaben wesentlich schneller einsickert.

Zudem zeigt die Messung der Flüssigkeitsverteilung gleichfalls, dass die Windel mit dem Pulver 3 enthaltenden Core über eine deutlich länger Strecke die Flüssigkeit transportiert, als die Vergleichswindel mit einem Pulver 5 enthaltenden Core.

## TESTMETHODEN

**Absorption under Load (AUL) bei einer Belastung von 0,9 psi**

In einen Zylinder aus Plexiglas mit einem Innendurchmesser von 26,1 $\pm$ 0.03 mm und einem Boden aus metallischen Siebgewebe mit einer Maschenweite von 400 x 400 mesh wurden 0,16 $\pm$ 0.01 g ($W_1$) Superabsorbergranult der Korngröße zwischen 300 und 600 $\mu$m eingewogen. Die Körngrößen wurden mittels Sieben durch Siebe der Maschenweite 300 und 600 $\mu$m gewonnen. Auf das Superabsorbergranulat wurde ein Plättchen aus Teflon mit einem Außendurchmesser von von 26,1 $\pm$ 0.03 mm gelegt. Auf das Plättchen wurde ein Gewicht von 332,4 $\pm$ 0.1 g gestellt. Das Gewicht des Plättchens und des Gewichts über zusammen einen Druck von 63 g/cm$^2$ auf das Superabsorbergranulat aus. Die Meßapparatur wurde gewogen ($W_2$). Anschließend wurde die Meßapparatur auf eine Glasfilterplatte (Durchmesser 125 mm, Porosität = C (25 - 50 $\mu$m) gestellt, die mit einem Filterpapier abgedeckt war und sich in einer Glasschale befand. Die Glasschale war bis zum oberen Rand der Glasfilterplatte mit 0,9 %er NaCl-Lösung gefüllt. Durch den Kontakt mit der Flüssigkeit saugte der Superabsorber diese auf und begann zu quellen. Nach 1 h wurde die gesamte Meßapparatur von der Filterplatte genommen und erneut gewogen ($W_3$). Der AUL 0,9 psi wird in g/g angegeben und ergab sich aus folgender Formel:

$$AUL\,0,9\,psi = \frac{W_3 - W_2}{W_1}$$

**Absorption under Load (AUL) bei einer Belastung von 0,3 psi**

In einen Zylinder aus Plexiglas mit einem Innendurchmesser von 26,1 $\pm$ 0.03 mm und einem Boden aus metallischen Siebgewebe mit einer Maschenweite von 400 x 400 mesh wurden 0,16 $\pm$ 0.01 g ($W_1$) Superabsorbergranult der Korngröße zwischen 300 und 600 $\mu$m eingewogen. Die Körngrößen wurden mittels Sieben durch Siebe der Maschenweite 300 und 600 $\mu$m gewonnen. Auf das Superabsorbergranulat wurde ein Plättchen aus Teflon mit einem Außendurchmesser von von 26,1 $\pm$ 0.03 mm gelegt. Auf das Plättchen wurde ein Gewicht von 102,3 $\pm$ 0.1 g gestellt. Das Gewicht des Plättchens und des Gewichts über zusammen einen Druck von 20 g/cm$^2$ auf das Superabsorbergranulat aus. Die Meßapparatur wurde gewogen ($W_2$). Anschließend wurde die Meßapparatur auf eine Glasfilterplatte (Durchmesser 125 mm, Porosität = C (25 - 50 $\mu$m) gestellt, die mit einem Filterpapier abgedeckt ist und sich in einer Glasschale befindet. Die Glasschale war bis zum oberen Rand der Glasfilterplatte mit 0,9 %er NaCl-Lösung gefüllt. Durch den Kontakt mit der Flüssigkeit saugte der Superabsorber diese auf und begann zu quellen. Nach 1 h wurde die gesamte Meßapparatur von der Filterplatte genommen und erneut gewogen ($W_3$). Der AUL 0,3 psi wurde in g/g angegeben und ergab sich aus folgender Formel:

$$AUL\,0{,}3\,psi = \frac{W_3 - W_2}{W_1}$$

**Penetrationstest**

Dieser Test wurde mittels einer Apparatur gemäss Fig. 1 durchgeführt. Diese bestand aus einem Glasrohr 1 mit einem Innendurchmesser von 8 mm und einer Länge von 310 mm, die mit Wattepropfen 2 verschlossen waren. Das zu untersuchende absorbierende Material wurde in das Rohr auf einer Länge von 300 mm gefüllt und durch 10maliges Aufschlagen des Rohrs verdichtet. Es wurde so viel absorbierendes Material aufgefüllt, dass die 300 mm Füllhöhe wieder erreicht wurden. Anschliessend wurde das Rohr 1 mit einem Reservoir 3 über einen Kunststoffschlauch 4 verbunden. Der Flüssigkeitsspiegel des Reservoirs 3 lag 1 m über dem horizontal angeordneten Rohr 1, um auf diese Weise einen Flüssigkeitsdruck von 0,1 bar an das Rohr anzulegen. Darauf wurde der Hahn 5 geöffnet, so dass die Testlösung in das mit absorbierendem Material gefüllte Rohr 1 eindringen konnte. In in der vorstehenden Tabelle beschriebenen Messzeiträumen wurde die Strecke gemessen, die die Testlösung in das mit absorbierendem Material gefüllte Rohr 1 eindrang.

**Gelstabilitätstest**

Die für den Gestabilitätstest verwendete, in Fig. 2 dargestellte Apparatur bestandt aus einem Kunststoffzylinder 6 mit einer Länge von 40 cm und einem Durchmesser von 30 mm. Der Kunststoffzylinder 6 wurde mit einem Gummistopfen 7 verschlossen. Der Zylinder 6 wurde in einem Stativ 8 mit einer Neigung von 10 Grad befestigt. Eine Stahlkugel 9 mit einem Durchmesser von 26,2 mm und einer Masse von 73,3 g wurde zum Durchlaufen durch das gemessene absorbierende Material verwendet. Zunächst wurde die maximale Absorption des superabsorbierenden Polymers (SAP) in deionisiertem Wasser bestimmt. Dazu wurden $0{,}200 \pm 0{,}005$ g SAP (Einwaage $W_1$) in einem heißsiegelbaren Teebeutel aus Dexter paper (Grade 7291) (12 x 8,5 cm), der einmal gefaltet war und bis auf eine Seite versiegelt wurde, eingewogen. Es ist jeweils eine Dreifachbestimmung (Teebeutel mit SAP) und eine Doppelbestimmung für die Blindprobe (Teebeutel ohne SAP) durchzuführen. Die offene Seite der Teebeutel wurde mittels eines Haushaltsschweißgeräts verschlossen (ca. 3 - 5 mm vom Rand). Betrug die Zeitspanne zwischen Einwaage und Messung länger als 5 Minuten, wurden die Teebeutel in ein geschlossenes Gefäß gelegt. Die Blindproben (Teebeutel ohne SAP) wurden analog hergestellt. Eine Plastikschale wurde mit deionisiertem Wasser gefüllt. Der Flüssigkeitsstand sollte etwa 4 cm hoch sein. Wurde die Lösung für weitere Tests verwendet, musste der Flüssigkeitsstand überprüft werden. Gegebenenfalls war die Schale wieder aufzufüllen. Nach maximal 10 getauchten Teebeuteln pro Liter Testflüssigkeit war die Lösung zu erneuern. Die vorbereiteten Teebeutel wurden horizontal gehalten und das SAP wurde durch leichtes Schütteln gleichmäßig im Teebeutel verteilt. Die Teebeutel (mit und ohne SAP) wurden auf die Oberfläche der Testlösung gelegt und bis zur vollständigen Benetzung mit Flüssigkeit kurz untergetaucht. Gleichzeitig wurde der Kurzzeitwecker gestartet. Nach 30 Minuten wurden die Teebeutel herausgenommen und für 10 Minuten zum Abtropfen an den Ecken aufgehängt. Anschließend wurden die Teebeutel ohne Superabsorber ($W_2$) und die Teebeutel mit Superabsorber ($W_3$) gewogen. (Waagengenauigkeit: 0,01 g). Die Absorption berechnete sich nach der Formel

$$\frac{W_3 - W_2 - W_1}{W_1}$$

und wird in g Flüssigkeit pro g SAP angegeben. Dementsprechend wird die zur Absorption von 500 g deioniertem Wasser erforderliche Superabsorbermenge berechnet und auf ein Wäageschiffchen eingewogen. In ein 600 ml Becherglas werden 500 g Wasser eingewogen. Nach Zufügen eines Rührfisches läßt man die Lösung bei 300 upm rühren. Der Superabsorber wird schnellstmöglich eingestreut. Ein Blockeffekt beim Einstreuen ist zu vermeiden, indem man während der Zugabe des SAP's die Magnetrührereinstellung auf 700 UpM erhöh, bis die SAP-Menge eingestreut ist. Dann wird auf 300 UpM zurückgestellt und die Stoppuhr gestartet. Die Rührzeit betägt 3 Minuten. Nach Ausschalten des Rührers wird die Stoppuhr erneut gestartet. Während 5 Minuten läßt man das Gel nachquellen. Anschließend wird der Kunststoffzylinder mit dem Gel bis zur 35 cm Meßmarke aufgefüllt. Die 1. Messung erfolgt nun, indem man die Metallkugel in das Gel gleiten läßt und die Zeit, die die Kugel für das Passieren der Meßmarken von 25 cm bis 10 cm benötigt, notiert. Dasselbe Gel wird in ein Glasgefäß mit Schraubdeckel überführt, verschlossen und 16 h bei 80°C im Trockenschrank gelagert und anschließend 4 h bei Raumtemperatur abgekühlt (Erwärmung). Danach erfolgt, wie oben beschrieben, die 2. Messung. Zeiten über 600 s werden als > 600 s notiert, Zeiten unter 4 s als < 4 s.

**Einsickerzeit und Flüssigkeitsverteilung**

Das Composite wurde gewogen, in die körpergeformte Testapparatur gelegt (je nach Anwendung wurde das Composite zusammen mit weiteren Materialien getestet) und belastet. Die Belastung richtet sich nach der Anwendung des zu prüfenden Composites. Danach wurden mehrere definierte Flüssigkeitsmengen mittels Meßzylinder oder zwangsweise mittels Pumpe durch die Öffnung der Testapparatur gegeben. Mittels Stoppuhr konnte die Einsickerzeit vom Zugabestart bis zum vollständigen Einsickern der Testflüssigkeit gemessen werden. Nach jeder Flüssigkeitszugabe folgt eine Wartezeit von 20 Minuten. Anschließend wurden die Gewichte abgenommen. Das Leakageverhalten wurde während des gesamten Versuchs optisch beurteilt und / oder durch Rückwaage der ausgelaufenen Flüssigkeit bestimmt. Die Flüssigkeitsverteilung wurde jeweils kurz vor Zugabe der nächsten Flüssigkeitsmenge bzw. vor Herausnahme des Composites aus der Testapparatur bestimmt. Dazu wurde die Ausbreitung der Flüssigkeit im Composite gemessen.

Prüfparameter

| Prüflösung | | 0,9% NaCl-Lösung (5ml/l Fuchsinsäure) | |
|---|---|---|---|
| Anzahl Zugaben | 3 | Zugabemenge gesamt [g] | 180 |
| Belastung Kanga [kg] | 9 | Zugabeintervall [min] | 20 |
| Padlänge [cm] | 30 | Padbreite [cm] | 12 |
| Belastung Rewet [g/cm$^2$] | 20 | Belastungsdauer Rewet [min] | 10 |

**Quelldruck**

Dieses Verfahren diente der Beurteilung, wie schnell ein Quellkörper seinen maximalen Quellzustand erreicht und welcher Quelldruck sich in dem Prüfmedium einstellt.

In dieser Methode wurden ein Stevens L.F.R.A Texture Analyser, ein Messkörper mit einer Höhe von 3,5 cm und einem Durchmesser von 2,5 cm, einem Messzylinder mit einer Höhe von 7,4 cm und einem Innendurchmesser von 2,7 cm, eine Waage mit 0,01 g Genauigkeit, eine Laborbühne, ein XYT-Schreiber, ein Meßzylinder von 10 ml sowie ein 20 to 50 mesh Sieb, USA Stand ASTM, und als Chemikalien destilliertes Wasser mit einem pH-Wert von 6-7, ae kleiner gleich 4 $\mu$s/cm sowie NaCl reinst der Firma Merk mit der Artikel-Nummer 6400 eingesetzt.

Es wurden 0,500 g Produkt der Fraktion 20 bis 50 mesh in den Messzylinder eingewogen und mit 10 ml 0,9 Gew.-%ger wässriger NaCl-Lösung versetzt. Nun wurde der Zylinder mit Hilfe einer Laborbühne bis unter die Geräteunterkante hochgefahren und fixiert. Die Messung erfolgte mit den Einstellungen Speed von 1,0 mm/s, Distance 00 und Hold. Der Quelldruck wurde in Gramm von dem XYT-Schreiber abgelesen.

**Patentansprüche**

**1.** Verfahren zur Herstellung eines absorbierenden Polymergebildes (Pa), umfassend die Schritte:

- Erhöhen der Absorption under Load bei einer Belastung von 2,068 kPa oder 6,205 kPa (AUL) im Vergleich zu einem unbehandelten absorbierenden Polymergebilde (Pu) durch ein erstes Behandeln eines Aussenbereichs des unbehandelten absorbierenden Polymergebildes (Pu), wobei ein behandeltes absorbierendes Polymergebilde (Pb) erhalten wird;
- Erniedrigen des AUL im Vergleich zu dem behandelten Polymergebilde (Pb) durch ein zweites Behandeln eines Aussenbereichs des behandelten absorbierenden Polymergebildes (Pb),

wobei das erste Behandeln durch einen chemischen Vernetzer, durch thermische Vernetzung oder durch Strahlenvernetzung und das zweite Behandeln durch in Kontakt bringen des behandelten absorbierenden Polymergebildes (Pb) mit einem Beschichtungsmittel erfolgt und wobei das Beschichtungsmittel das als ein Beschichtungsmittelteilchen vorliegt ein auf einem Saccharid basierendes Polymer aufweist, wobei das behandelte absorbierende Polymergebilde (Pb) eine CRC gemäß ERT 441.1-99 von 10-100 g/g aufweist.

**2.** Verfahren nach Anspruch 1, wobei durch das zweite Behandeln die *Centrifuge Retention Capacity* (CRC) prozentual, bezogen auf den Wert vor dem in Kontakt bringen, weniger absinkt als der AUL erniedrigt wird.

3. Verfahren nach einem der vorhergehenden Ansprüche, wobei das unbehandelte absorbierende Polymergebilde (Pu) auf ($\alpha$1

) 0,1 bis 99,999 Gew.-% polymerisierten, ethylenisch ungesättigten, säuregruppenhaltigen Monomeren oder deren Salze oder polymerisierten, ethylenisch ungesättigten, einen protonierten oder quarternierten Stickstoff beinhaltenden Monomeren, oder deren Mischungen,

($\alpha$2) 0 bis 70 Gew.-% polymerisierten, ethylenisch ungesättigten, mit ($\alpha$1) copolymerisierbaren Monomeren,
($\alpha$3) 0,001 bis 10 Gew.-% eines oder mehrerer Vernetzer, sowie ($\alpha$4) 0 bis 20 Gew.-% wasserlöslichen Polymeren
($\alpha$5) 0 bis 20 Gew.-% eines oder mehrere Hilfsstoffe basiert,
wobei die Summe der Gewichtsmengen ($\alpha$1) bis ($\alpha$5) 100 Gew.-% beträgt.

4. Verfahren nach einem der vorhergehenden Ansprüche, wobei das behandelte absorbierende Polymergebilde (Pb) zusätzlich zu dem Beschichtungsmittel mit einem Benetzungsmittel in Kontakt gebracht wird.

5. Verfahren nach Anspruch 4, wobei das behandelte absorbierende Polymergebilde (Pb) zunächst mit dem Beschichtungsmittel und anschließend mit dem Benetzungsmittel in Kontakt gebracht wird.

6. Verfahren nach einem der vorhergehenden Ansprüche, wobei das Beschichtungsmittel einen organischen und einen anorganischen Bestandteil aufweist.

7. Verfahren nach einem der vorhergehenden Ansprüche, wobei das Teilchen kleiner als das Polymergebilde ist.

8. Verfahren nach einem der Ansprüche 6 oder 7, wobei der anorganische Bestandteil ein Feststoff ist, der mindestens eine der folgenden Eigenschaften zeigt:

($\alpha$) eine Oberfläche nach BET von mindestens 10 $m^2/g$,
($\beta$) einen pH-Wert in 4%iger wässrigen Dispersion im Bereich von 2 bis 9,
($\gamma$) eine Stampfdichte von weniger als 800g/l.

9. Verfahren nach einem der Ansprüche 6 bis 8, wobei der anorganische Bestandteil auf einer Siliziumverbindung basiert.

10. Verfahren nach einem der vorhergehenden Ansprüche, wobei das behandelte, absorbierende Polymergebilde (Pb) einen von dem Aussenbereich umgebenen Innenbereich aufweist und der Aussenbereich einen höheren Vernetzungsgrad als der Innenbereich besitzt.

11. Verfahren nach Anspruch 10, wobei der Radius des Aussenbereichs kleiner ist als der zweifache Radius des Innenbereichs.

12. Absorbierendes Polymergebilde (Pa) erhältlich nach einem Verfahren
gemäß einem der Ansprüche 1 bis 11
mit folgenden Eigenschaften:

($\beta$1) eine CRC vom mindestens 10 g/g,
($\beta$2) eine AUL bei einer Belastung von 2,068 kPa von mindestens 15 g/g,
($\beta$3) eine AUL bei einer Belastung von 6,205 kPa von mindestens 8 g/g,
($\beta$4) eine Gelstabilität im Bereich von mindestens 100 s bei einer ersten Messung vor einer Erwärmung und mindestens 15 s bei einer zweiten Messung nach der Erwärmung, oder
($\beta$5) eine Penetration von höchstens 15 cm nach 2 h oder höchstens 20 cm nach 24 h, oder
($\beta$6) einen Quelldruck von mindestens 500 g,
beinhaltend einen Innenbereich, einen den Innenbereich umgebenden Aussenbereich sowie einen den Aussenbereich umgebenden Oberflächenbereich, wobei der Aussenbereich einen höheren Vernetzungsgrad als der Innenbereich aufweist und der Oberflächenbereich ein Beschichtungsmittel aufweist, welches als Beschichtungsmittelteilchen vorliegt, welches ein auf einem Saccharid basierendes Polymer aufweist.

13. Absorbierendes Polymergebilde (Pa) nach Anspruch 14 mit einem AUL bei einer Belastung von 2,068 kPa von kleiner 27 g/g und einem Quelldruck von mindestens 400 g.

14. Verbund, beinhaltend ein absorbierendes Polymergebilde (Pa) nach einem der Ansprüche 12 bis 13 und ein Substrat.

15. Verfahren zur Herstellung eines Verbundes, wobei ein absorbierendes Polymergebilde (Pa) nach einem der Ansprüche 12 bis 13 und ein Substrat und gegebenenfalls ein Hilfsmittel miteinander in Kontakt gebracht werden.

16. Verbund, erhältlich nach einem Verfahren gemäß Anspruch 15.

17. Schäume, Formkörper, Teilchen, Fasern, Folien, Filme, Kabel, Dichtungsmaterialien, flüssigkeitsaufnehmende Hygieneartikel, Träger für pflanzen- und pilzwachstumregulierende Mittel, Verpackungsmaterialien, Bodenzusätze oder Baustoffe, beinhalten das absorbierende Polymergebilde (Pa) nach einem der Ansprüche 12 bis 13 oder den Verbund nach Anspruch 15 oder 17.

18. Verwendung des absorbierenden Polymergebildes (Pa) nach einem der Ansprüche 12 bis 13 oder des Verbunds nach Anspruch 14 oder 16 in Schäumen, Formkörpern, Fasern, Folien, Filmen, Kabeln, Dichtungsmaterialien, flüssigkeitsaufnehmenden Hygieneartikeln, Trägern für pflanzen- und pilzwachstumregulierenden Mitteln, Verpackungsmaterialien, Bodenzusätzen, zur kontrollierten Freisetzung von Wirkstoffen oder in Baustoffen.

## Claims

1. Process for producing an absorbent polymer structure (Pa), comprising the steps of:

   - increasing the absorption under a load of 2.068 kPa or 6.205 kPa (AUL) compared to an untreated absorbent polymer structure (Pu) by a first treatment of an outer region of the untreated absorbent polymer structure (Pu) to obtain a treated absorbent polymer structure (Pb) ;
   - lowering the AUL compared to the treated polymer structure (Pb) by a second treatment of an outer region of the treated absorbent polymer structure (Pb),

   wherein the first treatment is effected by means of a chemical crosslinker, by thermal crosslinking or by radiative crosslinking, and the second treatment by contacting the treated absorbent polymer structure (Pb) with a coating composition, and wherein the coating composition present in the form of a coating composition particle includes a saccharide-based polymer, wherein the treated absorbent polymer structure (Pb) has a CRC according to ERT 441.1-99 of 10-100 g/g.

2. Process according to Claim 1, wherein the second treatment results in a smaller percentage decrease in the centrifuge retention capacity (CRC), based on the value prior to contacting, than in the AUL.

3. Process according to either of the preceding claims, wherein the untreated absorbent polymer structure (Pu) is based on
   ($\alpha$1) 0.1% to 99.999% by weight of polymerized ethylenically unsaturated monomers containing acid groups or salts thereof or polymerized ethylenically unsaturated monomers including a protonated or quaternized nitrogen, or mixtures thereof,
   ($\alpha$2) 0% to 70% by weight of polymerized ethylenically unsaturated monomers copolymerizable with ($\alpha$1),
   ($\alpha$3) 0.001% to 10% by weight of one or more crosslinkers, and
   ($\alpha$4) 0% to 20% by weight of water-soluble polymers, ($\alpha$5) 0% to 20% by weight of one or more auxiliaries,
   where the sum total of the weights ($\alpha$1) to ($\alpha$5) is
   100% by weight.

4. Process according to any of the preceding claims, wherein the treated absorbent polymer structure (Pb), in addition to the coating composition, is contacted with a wetting composition.

5. Process according to Claim 4, wherein the treated absorbent polymer structure (Pb) is contacted first with the coating composition and then with the wetting composition.

6. Process according to any of the preceding claims, wherein the coating composition includes an organic constituent and an inorganic constituent.

7. Process according to any of the preceding claims, wherein the particle is smaller than the polymer structure.

8. Process according to either of Claims 6 and 7, wherein the inorganic constituent is a solid that exhibits at least one of the following properties:

($\alpha$) a BET surface area of at least 10 m$^2$/g,
($\beta$) a pH in 4% aqueous dispersion in the range from 2 to 9,
($\gamma$) a tamped density of less than 800 g/l.

9. Process according to any of Claims 6 to 8, wherein the inorganic constituent is based on a silicon compound.

10. Process according to any of the preceding claims, wherein the treated absorbent polymer structure (Pb) has an inner region surrounded by the outer region and the outer region has a higher crosslinking level than the inner region.

11. Process according to Claim 10, wherein the radius of the outer region is less than twice the radius of the inner region.

12. Absorbent polymer structure (Pa) obtainable by a process according to any of Claims 1 to 11, having the following properties:

($\beta$1) a CRC of at least 10 g/g,
($\beta$2) an AUL at a load of 2.068 kPa of at least 15 g/g,
($\beta$3) an AUL at a load of 6.205 kPa of at least 8 g/g,
($\beta$4) a gel stability in the region of at least 100 s in a first measurement prior to a heating operation and at least 15 s in a second measurement after the heating operation, or
($\beta$5) a penetration of not more than 15 cm after 2 h or not more than 20 cm after 24 h, or
($\beta$6) a swelling pressure of at least 500 g,

comprising an inner region, an outer region surrounding the inner region, and a surface region surrounding the outer region, wherein the outer region has a higher crosslinking level than the inner region and the surface region includes a coating composition present in the form of a coating composition particle including a saccharide-based polymer.

13. Absorbent polymer structure (Pa) according to Claim 14 having an AUL at a load of 2.068 kPa of less than 27 g/g and a swelling pressure of at least 400 g.

14. Composite comprising an absorbent polymer structure (Pa) according to either of Claims 12 and 13 and a substrate.

15. Process for producing a composite, wherein an absorbent polymer structure (Pa) according to either of Claims 12 and 13 and a substrate and optionally an auxiliary are contacted with one another.

16. Composite obtainable by a process according to Claim 15.

17. Foams, mouldings, particles, fibres, foils, films, cables, sealing materials, liquid-absorbing hygiene articles, carriers for plant growth regulators and fungal growth regulators, packaging materials, soil additives or building materials, comprising the absorbent polymer structure (Pa) according to either of Claims 12 and 13 or the composite according to Claim 15 or 17.

18. Use of the absorbent polymer structure (Pa) according to either of Claims 12 and 13 or of the composite according to Claim 14 or 16 in foams, mouldings, fibres, foils, films, cables, sealing materials, liquid-absorbing hygiene articles, carriers for plant growth regulators and fungal growth regulators, packaging materials, soil additives, for controlled release of active ingredients, or in building materials.

**Revendications**

1. Procédé pour la production d'une structure polymère absorbante (Pa), comprenant les étampes :

- augmentation de l'absorption sous charge (AUL), sous une charge de 2,068 kPa ou 6,205 kPa en comparaison d'une structure polymère absorbante non traitée (Pu), par un premier traitement d'une zone externe de la structure polymère absorbante non traitée (Pu), avec obtention d'une structure polymère absorbante traitée (Pb) ;
- réduction de l'AUL en comparaison de la structure polymère traitée (Pb), par un second traitement d'une zone externe de la structure polymère absorbante traitée (Pb),

dans lequel le premier traitement s'effectue au moyen d'un agent de réticulation chimique, par réticulation thermique ou par réticulation par irradiation et le second traitement s'effectue par mise en contact de la structure polymère absorbante traitée (Pb) avec un agent de revêtement et dans lequel l'agent de revêtement, qui se trouve sous forme d'une particule d'agent de revêtement, comporte un polymère à base d'un saccharide, de sorte que la structure polymère absorbante traitée (Pb) présente une CRC selon ERT 441.1-99 de 10-100 g/g.

2. Procédé selon la revendication 1, dans lequel la *Centrifuge Rétention Capacity* (CRC) est, en pourcentage, moins réduite par le second traitement, par rapport à la valeur avant la mise en contact, que l'AUL est diminuée.

3. Procédé selon l'une quelconque des revendications précédentes, dans lequel la structure polymère absorbante non traitée (Pu) est à base de

($\alpha$1) 0,1 à 99,999 % en poids de monomères à insaturation éthylénique, contenant des groupes acides, ou de leurs sels, polymérisés, ou de monomères à insaturation éthylénique, comportant un atome d'azote protoné ou quaternisé, polymérisés, ou de mélanges de ceux-ci,

($\alpha$2) 0 à 70 % en poids de monomères à insaturation éthylénique copolymérisables avec ($\alpha$1), polymérisés,

($\alpha$3) 0,001 à 10 % en poids d'un ou de plusieurs agents de réticulation, ainsi que

($\alpha$4) 0 à 20 % en poids de polymères hydrosolubles

($\alpha$5) 0 à 20 % en poids d'un ou de plusieurs adjuvants, la somme des quantités pondérales ($\alpha$1) à ($\alpha$5) étant égale à 100 % en poids.

4. Procédé selon l'une quelconque des revendications précédentes, dans lequel la structure polymère absorbante traitée (Pb), en plus d'être mise en contact l'agent de revêtement, est mise en contact avec un agent mouillant.

5. Procédé selon la revendication 4, dans lequel la structure absorbante traitée (Pb) est d'abord mise en contact avec l'agent de revêtement et ensuite avec l'agent mouillant.

6. Procédé selon l'une quelconque des revendications précédentes, dans lequel l'agent de revêtement comporte un constituant organique et un constituant inorganique.

7. Procédé selon l'une quelconque des revendications précédentes, dans lequel la particule est plus petite que la structure polymère.

8. Procédé selon l'une quelconque des revendications 6 et 7, dans lequel le constituant inorganique est un solide qui présente au moins l'une des propriétés suivantes :

($\alpha$) une surface selon BET d'au moins 10 m$^2$/g,

($\beta$) un pH en dispersion aqueuse à 4 % dans l'intervalle de 2 à 9,

($\gamma$) une densité apparente de moins de 800 g/l.

9. Procédé selon l'une quelconque des revendications 6 à 8, dans lequel le constituant inorganique est à base d'un composé contenant du silicium.

10. Procédé selon l'une quelconque des revendications précédentes, dans lequel la structure polymère absorbante traitée (Pb) comporte une zone interne entourée par la zone externe, et la zone externe présente un plus haut degré de réticulation que la zone interne.

11. Procédé selon la revendication 10, dans lequel le rayon de la zone externe est inférieur au double du rayon de la zone interne.

12. Structure polymère absorbante (Pa) pouvant être obtenue conformément à un procédé selon l'une quelconque des revendications 1 à 11,
ayant les propriétés suivantes :

($\beta$1) une CRC d'au moins 10 g/g,

($\beta$2) une AUL sous une charge de 2,068 kPa d'au moins 15 g/g,

($\beta$3) une AUL sous une charge de 6,205 kPa d'au moins 8 g/g,

(β4) une stabilité de gel dans la plage d'au moins 100 s dans une première mesure avant un chauffage et d'au moins 15 s dans une seconde mesure après le chauffage, ou

(β5) une pénétration d'au maximum 15 cm après 2 h ou d'au maximum 20 cm après 24 h, ou

(β6) une pression de gonflement d'au moins 500 g, comportant une zone interne, une zone externe entourant la zone interne ainsi qu'une zone superficielle entourant la zone externe, la zone externe présentant un plus haut degré de réticulation que la zone interne et la zone superficielle comportant un agent de revêtement qui est présent sous forme de particules d'agent de revêtement, qui comporte un polymère à base d'un saccharide.

13. Structure polymère absorbante (Pa) selon la revendication 14, ayant une AUL sous une charge de 2,068 kPa de moins de 27 g/g et une pression de gonflement d'au moins 400 g.

14. Composite, comportant une structure polymère absorbante (Pa) selon l'une quelconque des revendications 12 et 13 et un support.

15. Procédé pour la fabrication d'un composite, dans lequel on met en contact entre eux une structure polymère absorbante (Pa) selon l'une quelconque des revendications 12 et 13 et un support et éventuellement un adjuvant.

16. Composite, pouvant être obtenu conformément à un procédé selon la revendication 15.

17. Mousses, corps moulés, particules, fibres, feuilles, films, câbles, matériaux d'étanchéité, articles d'hygiène absorbant des liquides, supports pour agents régulateurs de la croissance de plantes et de champignons, matériaux d'emballage, additifs pour sols, ou matériaux de construction, qui comportent la structure polymère absorbante (Pa) selon l'une quelconque des revendications 12 et 13 ou le composite selon la revendication 15 ou 17.

18. Utilisation de la structure polymère absorbante (Pa) selon l'une quelconque des revendications 12 et 13 ou du composite selon la revendication 14 ou 16 dans des mousses, corps moulés, fibres, feuilles, films, câbles, matériaux d'étanchéité, articles d'hygiène absorbant des liquides, supports pour agents régulateurs de la croissance de plantes et de champignons, matériaux d'emballage, additifs pour sols, pour la libération programmée de substances actives, ou dans des matériaux de construction.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US RE32649 E
- DE 4020780
- US 5639148 A
- US 5797893 A
- JP 2000093792 A
- JP 11286611 A
- DE 19529348
- US 4286082 A
- DE 2706135
- US 4076663 A
- DE 3503458
- DE 4244548
- DE 4323001
- DE 4333056
- DE 4418818
- DE 19543366
- DE 19543368
- US 4703132 A
- US 5916670 A
- US 5866242 A
- US 5300192 A
- US 5061295 A
- US RE26151 E
- US 3592194 A
- US 3489148 A
- US 3860003 A

**In der Beschreibung aufgeführte Nicht-Patentliteratur**

- **H. SAVANO et al.** *International Wire & Cabel Symposium Proceedings,* 1991, vol. 40, 333-338
- **M. FUKUMA et al.** *International Wire & Cabel Symposium Proceedings,* 1987, vol. 36, 350-355